# EUROPÄISCHE PATENTANMELDUNG

(11) **EP 1 834 686 A1**
(43) Veröffentlichungstag der Anmeldung: **19.09.2007**
(21) Anmeldenummer: 07102155.4
(22) Anmeldetag: 12.02.2007
(51) Int. Cl.: B01D 46/24, F16L 5/02, F16L 5/06, F16L 5/08

(54) **Filtervorrichtung**

(30) Priorität: 16.03.2006 DE 102006012591
(71) Anmelder: MANN+HUMMEL GmbH, 71638 Ludwigsburg (DE)
(72) Erfinder: Dworatzek, Klemens, 68535, Edingen (DE); Bauder, Ralf, 68775, Ketsch (DE)

(57) **Zusammenfassung**

Eine Filtervorrichtung besteht aus einem Gehäuse (2) und einem Filtereinsatz (4), wobei an dem Gehäuse (2) eine Einlassöffnung ausgebildet und an einer Gehäusewand ein Auslassstutzen (6) angeordnet ist. Der Auslassstutzen (6) besitzt eine Anlagefläche (7) zur Anlage am Gehäuse (2) und ist mit einem Rohrabschnitt (13) versehen, der durch eine Öffnung (9) des Gehäuses ragt. An dem Rohrabschnitt (13) ist ein Befestigungselement (22) montiert, wobei ein die Öffnung (9) umgebender Bereich (10) des Gehäuses (2) zwischen der Anlagefläche (7) des Anschlussstutzens (6) und dem Befestigungselement (22) eingespannt ist.

## Beschreibung

Die Erfindung betrifft eine Filtervorrichtung mit den Merkmalen des Oberbegriffs des Anspruchs 1.

Aus US 5,882,367 ist eine Filtervorrichtung bekannt, bei der in einem im Wesentlichen zylindrischen Gehäuse eine Filterpatrone angeordnet ist. An der Mantelfläche des Filtergehäuses ist eine Einlassöffnung vorgesehen, die mit einem zwischen der Filterpatrone und dem Gehäuse bebildeten Ringraum in Verbindung steht. Innerhalb der Filterpatrone ist eine Kammer gebildet, aus der die gefilterte Luft durch einen Ausgangsstutzen abgeführt wird. Der Ausgangsstutzen ist an der Stirnseite des Gehäuses durch eine Rastverbindung befestigt.

Bei der bekannten Anordnung wird der Anschlussstutzen für den Luftauslass in eine Öffnung des Gehäuses eingesteckt und dort verrastet. Dabei muss der Werkstoff des Gehäuses einerseits elastisch genug sein, um die für die Rastverbindung erforderliche temporäre Auslenkung zu ermöglichen und andererseits muss eine ausreichende Festigkeit des Werkstoffs gegeben sein, um den Anschlussstutzen sicher am Gehäuse zu halten. Diesen Anforderungen kann jedoch allenfalls mit teueren Kunststoffen entsprochen werden, die aber zu sehr teueren Filtervorrichtungen führen würden und somit in der Regel nicht berücksichtigt werden.

Der vorliegenden Erfindung liegt die Aufgabe zugrunde, eine Filtervorrichtung der gattungsgemäßen Art zu schaffen, bei der auf einfachere und billigere Weise eine spielfreie und formstabile Lagerung des Auslassstutzens am Gehäuse erreicht wird.

Diese Aufgabe wird erfindungsgemäß durch eine Filtervorrichtung mit den Merkmalen des Anspruchs 1 gelöst.

Durch die vorliegende Erfindung wird eine Filtervorrichtung geschaffen, bei der der Auslassstutzen spielfrei an dem Gehäuse gelagert ist und durch die Möglichkeit der Materialauswahl eine hohe Festigkeit und lange Lebensdauer der Verbindung erreicht wird. Dadurch, dass der Bereich des Gehäuses, der die Öffnung zur Aufnahme des Auslassstutzens umgibt, zwischen einer Anlagefläche des Auslassstutzens und dem Befestigungselement eingespannt ist, sind keine weiteren Dichtungsmittel erforderlich. Die spielfreie Lagerung wird auch dadurch erreicht, dass sich Maßtoleranzen der zu montierenden Teile auf einfache Weise ausgleichen. Ein weiterer Vorteil besteht darin, dass sich das Gesamtsystem durch strikte Trennung von Halte- und Montagekräften leicht abstimmen lässt. Bei Auslassstutzen, die in einem Bogen verlaufen, ist auch nach der Montage eine Einstellung in der gewünschten Richtung des Auslasses möglich.

Gemäß einer bevorzugten Ausgestaltung der Erfindung ist als Befestigungselement ein Befestigungsring vorgesehen, der auf der Mantelfläche des Rohrabschnitts fixiert ist. Dieser Befestigungsring hat den Vorteil, dass er auf einfache Weise auf dem Rohrabschnitt montiert werden kann und über den Gesamtumfang der Öffnung eine Abstützfläche gegenüber dem Gehäuse bildet, so dass eine ausreichende Anlagekraft bei geringer Flächenpressung gegeben ist. Es ist darüber hinaus vorteilhaft, dass die Anlagefläche des Auslassstutzens an einem Ringflansch des Auslassstutzens ausgebildet ist.

Eine zweckmäßige Ausführung zur Fixierung des Befestigungsringes auf dem Rohrabschnitt besteht darin, dass eine Schnapp- oder Rastverbindung vorgesehen ist. Dadurch ist es lediglich erforderlich, den Befestigungsring auf den Rohrabschnitt aufzuschieben, bis eine selbsttätige Einrastung erfolgt. Zur Ausgestaltung der Schnapp- bzw. Rastverbindung ist es vorteilhaft, dass an dem Rohrabschnitt oder dem Befestigungsring wenigstens ein umlaufender Vorsprung ausgebildet ist, der mit einem radialen Vorsprung oder einer radialen Vertiefung des jeweils anderen Bauteils zusammenwirkt. Dadurch, dass der Vorsprung umlaufend ist, kommt es nicht auf eine bestimmte Drehlage des Befestigungsringes gegenüber dem Rohrabschnitt an, so dass dies die Montage weiter vereinfacht. Zum anderen sind die Haltekräfte über den gesamten Umfang gleichmäßig verteilt.

In weiterer Ausgestaltung der Rastverbindung ist es vorteilhaft, dass sowohl der Rohrabschnitt als auch der Befestigungsring mit einem umlaufenden Vorsprung versehen sind und in Montagerichtung gesehen vor dem jeweiligen Vorsprung ein Einführkonus bzw. eine Einführschräge vorgesehen sind. Durch diese Ausgestaltung von Einführkonus bzw. Einführschräge erfolgt ein allmähliches Aufweiten bzw. Einschnüren bis zum Erreichen der maximal erforderlichen Maßänderung, so dass eine unzulässige mechanische Beanspruchung des Materials vermieden wird. Als weitere vorteilhafte Maßnahme wird angesehen, dass in Montagerichtung hinter dem jeweiligen Vorsprung bzw. der Vertiefung durch Schrägflächen eine keilförmige Geometrie gebildet ist, durch die der Befestigungsring zur sicheren Anlage an den Bereich des Gehäuses gebracht wird, der die Öffnung zur Aufnahme des Rohrabschnitts umgibt, und wobei außerdem der Ring mit einer entsprechenden Kraft an diesen Bereich angedrückt wird. In weiterer Ausgestaltung der Rastverbindung kann an dem Rohrabschnitt eine Ringnut vorgesehen sein, die von der Schrägfläche begrenzt wird und in die der am Befestigungsring ausgebildete Vorsprung greift. Durch diese Maßnahme wird erreicht, dass in Auszugrichtung des Befestigungsringes eine größere radiale Aufweitung erforderlich ist, so dass eine hohe Haltekraft des Befestigungsringes auf dem Rohrabschnitt gegeben ist.

Eine alternative Befestigungsart des Befestigungsringes auf dem Rohrabschnitt besteht darin, dass der Befestigungsring ein Innengewinde aufweist und an dem Rohrabschnitt ein Außengewinde vorgesehen ist, so dass der Befestigungsring auf den Rohrabschnitt geschraubt ist. Bei einer solchen Befestigung wird der Befestigungsring soweit auf den Rohrabschnitt geschraubt, bis der die Öffnung umgebende Bereich des Gehäuses zwischen dem Ringflansch des Anschlussstutzens und dem Befestigungsring eingespannt ist. Als zusätzliche Sicherung des Befestigungsringes auf dem Rohrabschnitt wird es als vorteilhaft angesehen, dass an dem Befestigungsring und/oder dem Rohrabschnitt eine Vorrichtung zum Verhindern des Zurückschraubens vorgesehen sind. Auf diese Weise wird der Befestigungsring auch auf dem Rohrabschnitt gesichert, wenn der Auslassstutzen gegenüber dem Gehäuse in eine Richtung gedreht wird, die der Abschraubrichtung des Gewindes entspricht.

In weiterer Ausgestaltung kann der Befestigungsring einen radial nach außen gerichteten Flansch aufweisen, an dem ein Ende des Filtereinsatzes anliegt. Vorzugsweise besitzt das Gehäuse eine im Wesentlichen zylindrische Form und der Filtereinsatz ist als Filterpatrone ausgebildet. Bei einer derartigen Gestaltung ist es zweckmäßig, dass der Auslassstutzen an einem stirnseitigen Ende des Gehäuses und zentrisch zu der Filterpatrone angeordnet ist. Zur Abstützung des Filtermaterials gegen die radial nach innen wirkenden Kräfte in der Filterpatrone ist es vorteilhaft, dass an dem freien Ende des Rohrabschnitts ein Stützgitter angeordnet ist, das sich innerhalb der Filterpatrone zumindest über einen Teil der axialen Länge erstreckt. Dabei kann das Stützgitter aus dem gleichen Material bestehen wie der Anschlussstutzen, wobei eine einstückige Fertigung vorteilhaft ist.

In zweckmäßiger Ausgestaltung ist an dem stirnseitigen Ende des Gehäuses ein axialer Abschnitt angeformt, der in einen radialen Bund übergeht, in dem sich die Öffnung zum Durchtritt des Rohrabschnitts befindet. Durch diesen radialen Abschnitt wird ein entsprechender Raum für den Befestigungsring gebildet und außerdem ist eine derartige Formgebung auch bei relativ geringen Wandstärken formstabil.

Ein Ausführungsbeispiel der erfindungsgemäßen Filtervorrichtung ist nachstehend anhand der Zeichnung näher erläutert. In der Zeichnung zeigt:
- Fig. 1: die wesentlichen Teile einer Filtervorrichtung in Explosionsdarstellung,
- Fig. 2: einen Längsschnitt durch den oberen Teil des Gehäuses mit einem Teil des Anschlussstutzens und Befestigungsringes,

- Fig. 3: eine etwas vergrößerte Darstellung des Schnittes gem. Fig. 2, jedoch in verrastetem Zustand,
- Fig. 4: einen Auslassstutzen mit einem Gewinde zum Aufschrauben eines Befestigungsringes,
- Fig. 5: eine vergrößerte Darstellung der Einzelheit V in Fig. 4,
- Fig. 6: eine perspektivische Ansicht eines vergrößert dargestellten Befestigungsringes,
- Fig. 7: eine vergrößerte Darstellung der Einzelheit VII in Fig. 6.

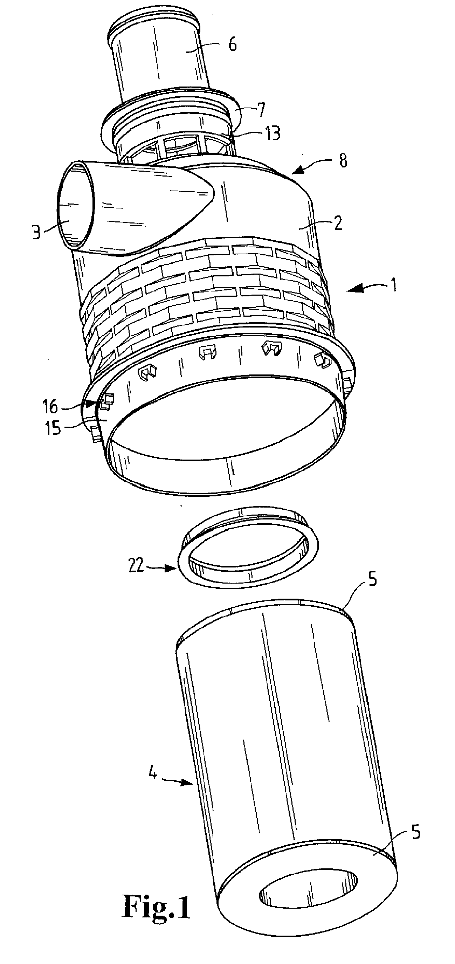

Die Fig. 1 zeigt einen Luftfilter 1 mit einem Gehäuse 2, das im Wesentlichen zylindrisch ausgebildet ist. An dem unteren Rand 15 des Gehäuses 2 wird ein in der Zeichnung nicht dargestelltes unteres Gehäuseteil angeordnet. Zu diesem Zweck sind an dem unteren Rand 15 über den Umfang verteilt mehrere Vorsprünge 16 vorgesehen, die formschlüssig in das andere Gehäuseteil greifen. An der Mantelfläche des Gehäuses 2 ist ein Einlassstutzen 3 vorgesehen, in dem eine Einlassöffnung ausgebildet ist. An einem stirnseitigen Ende 8 des Gehäuses 2 ist ein Auslassstutzen 6 angeordnet, der einen Ringflansch 7 aufweist, von dem aus sich in den Innenraum des Gehäuses 2 ein Rohrabschnitt 13 erstreckt. In das Gehäuse 2 wird ein Filterelement eingesetzt, das im Ausführungsbeispiel der Fig. 1 eine Filterpatrone 4 ist. Diese Filterpatrone 4 besitzt an ihren jeweiligen axialen Enden einen Verschluss 5, der beispielsweise aus einem elastischen Material besteht, in das die Enden des Filtermaterials eingebettet sind. Aus Fig. 1 ist außerdem ein Befestigungsring 22 ersichtlich, der von innen auf den Rohrabschnitt 13 des Auslassstutzens 6 geschoben und auf diesem befestigt wird.

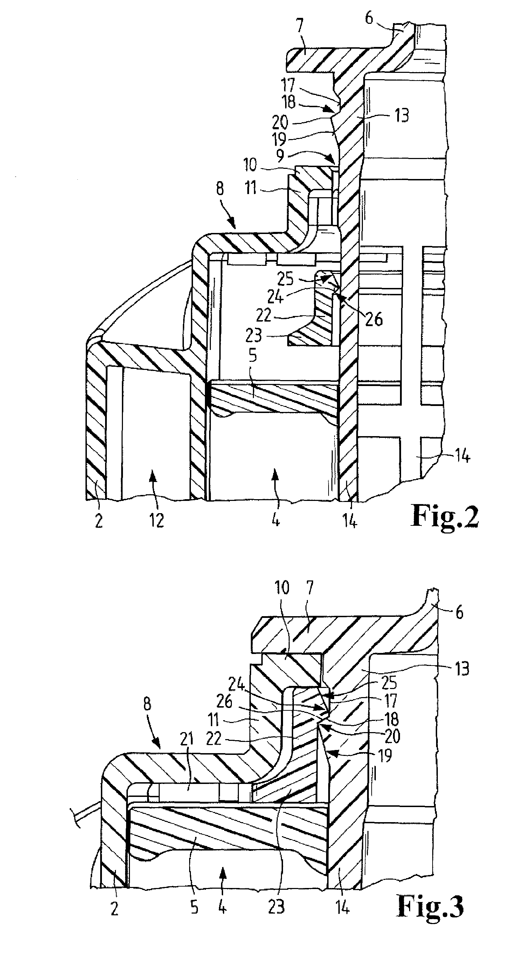

Die Fig. 2 zeigt einen Längschnitt durch den oberen Bereich des Gehäuses 2 während der Montage des Anschlussstutzens 6 an dem stirnseitigen Ende 8. An dem Anschlussstutzen 6 befindet sich unterhalb des Ringflansches 7 der Rohrabschnitt 13, an dessen freiem Ende, also in den Innenraum des Gehäuses 2 gewandt, ein Stützgitter 14 angeformt ist. Der Anschlussstutzen 6 wird mit dem Stützgitter 14 voran durch die zentrische Öffnung 9 des stirnseitigen Endes 8 gesteckt, wobei der Anschlussstutzen 6 soweit eingeführt wird, bis der Ringflansch 7 auf einem radialen Bund 10 des stirnseitigen Endes 8 des Gehäuses 2 aufliegt. Der radiale Bund 10 ist an einem axialen Abschnitt 11 des stirnseitigen Endes 8 angeformt.

Wie aus Fig. 2 weiter ersichtlich ist, weist der Rohrabschnitt 13 an seiner äußeren Mantelfläche eine Ringnut 17 auf, an deren dem Innenraum des Gehäuses 2 benachbarten Ende ein umlaufender Vorsprung 20 vorgesehen ist. Der umlaufende Vorsprung 20 weist in Montagerichtung, das heißt in Einsteckrichtung des Rohrabschnitts 13 gesehen, einen Einführkonus 19 auf und zur Ringnut 17 hin ist eine Schrägfläche 18 vorgesehen. Über das Stützgitter 14 ist ein Befestigungsring 22 geschoben, der an seiner inneren Mantelfläche einen umlaufenden Vorsprung 24 aufweist. In Montagerichtung gesehen, das heißt zu dem radialen Bund 10 hin, ist die innere Kontur als Einführschräge 25 gestaltet, so dass sich beim Ineinanderschieben des Rohrabschnitts 13 und des Befestigungsringes 22 eine allmähliche Aufweitung durch den Einführkonus 19 und die Einführschräge 25 ergibt. Auf der anderen Seite des umlaufenden Vorsprungs 25 schließt sich eine Schrägfläche 26 an, die bezüglich ihres Winkels zumindest im Wesentlichen der Schrägfläche 18 am Rohrabschnitt 13 entspricht. An der der Filterpatrone 4 zugewandten Seite weist der Befestigungsring 22 einen radialen Flansch 23 auf.

In Fig. 2 ist zwar ein Abschnitt der Filterpatrone 4 gezeigt, diese wird jedoch erst dann in das Gehäuse 2 eingeführt, wenn die Befestigung des Anschlussstutzens 6 an dem stirnseitigen Ende 8 des Gehäuses 2 durch Verrasten des Befestigungsringes 22 an dem Rohrabschnitt 13 hergestellt ist. Wie aus Fig. 2 weiter ersichtlich ist, befindet sich zwischen der Wand des Gehäuses 2 und der Filterpatrone 4 ein Ringraum 12, in den der in Fig. 1 gezeigte Einlassstutzen 3 mündet.

Die Fig. 3 zeigt einen Ausschnitt der Fig. 2 in etwas vergrößerter Darstellung, und zwar im montierten Zustand des Anschlussstutzens 6 am stirnseitigen Ende 8 des Gehäuses 2. Dabei liegt der Ringflansch 7 auf dem radialen Bund 10 auf. Der Befestigungsring 22 ist soweit auf den Rohrabschnitt 13 geschoben, dass der umlaufende Vorsprung 24 hinter den umlaufenden Vorsprung 20 am Rohrabschnitt 13 greift. Durch die Schrägflächen 18 und 26 wird eine keilförmige Geometrie gebildet, die den Befestigungsring 22 gegen die Innenseite des radialen Bundes 10 drückt, so dass der radiale Bund 10 zwischen dem Ringflansch 7 und dem Befestigungsring 22 eingespannt ist. Dabei befindet sich der umlaufende Vorsprung 24 innerhalb der Ringnut 17 am Rohrabschnitt 13. Die Funktion der Einführschräge 25 und des Einführkonus 19 wurde bereits zu Fig. 2 erläutert.

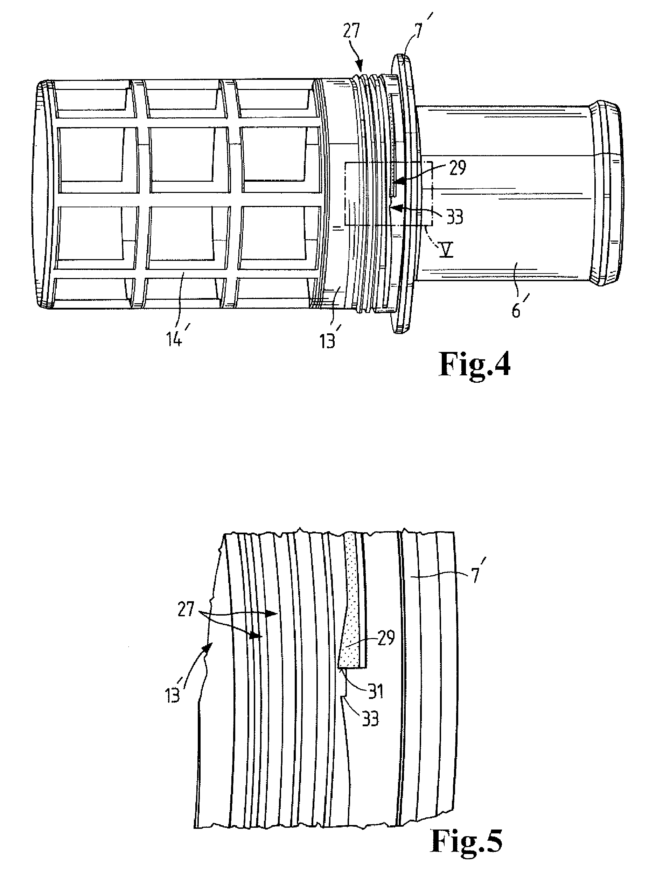

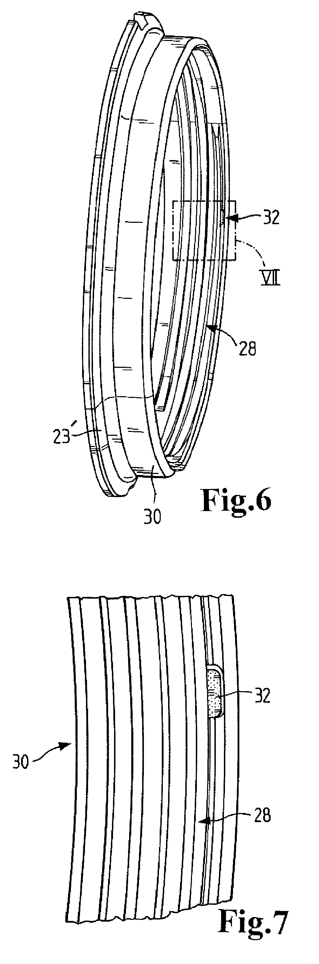

In Fig. 4 ist ein Anschlussstutzen 6' mit Ringflansch 7', Rohrabschnitt 13' und Stützgitter 14' gezeigt, wobei auf dem Rohrabschnitt ein Außengewinde 27 angeordnet ist. Das Außengewinde 27 hat eine geringe Steigung und dient dazu, dass der in Fig. 6 dargestellte Befestigungsring 30, der mit einem entsprechenden Innengewinde 28 versehen ist, auf den Rohrabschnitt 13' geschraubt werden kann. Dabei wird der radiale Bund 10 (vergl. Fig. 2 und 3) zwischen dem Ringflansch 7' und dem Befestigungsring 30 derart aufgenommen, dass eine Dichtigkeit an der Durchführung des Rohrabschnitts 13' durch den Bund 10 gegeben ist. Der Befestigungsring 30 besitzt einen radialen Flansch 23'.

Wie aus Fig. 4 und 6 sowie insbesondere den vergrößerten Darstellungen in Fig. 5 und 7 ersichtlich ist, sind im jeweiligen Gewinde 27, 28 Vorrichtungen angeordnet, die nach Erreichen eines vorgegebenen Montagezustandes, das heißt entsprechendem Aufschrauben des Befestigungsringes 30 auf den Rohrabschnitt 13', ein Zurückdrehen des Befestigungsringes 30 relativ zum Rohrabschnitt 13' verhindern. Diese Vorrichtungen umfassen zum einen eine sich entlang eines Gewindeabschnitts erstreckende Zunge 29, die an dem Ende des Außengewindes 27 angeordnet ist, das dem Ringflansch 7 benachbart ist. Die Zunge 29 ist in axialer Richtung des Rohrabschnitts 13' um einen bestimmten Weg auslenkbar, sofern er in dieser Richtung belastet wird. Am freien Ende der Zunge 29 ist diese mit einer Verriegelungskante 31 versehen. In einem Abstand ist in Gewinderichtung hinter der Verriegelungskante 31 ein Anschlag 33 ausgebildet.

Zum anderen umfassen die Vorrichtungen einen Verriegelungsvorsprung 32, der am Innengewinde 28 ausgebildet ist, und zwar an dessen in Aufschraubrichtung vorderem Ende. Der Verriegelungsvorsprung 32 ist bezüglich seiner Höhe in axialer Richtung derart bemessen, dass genügend Spiel im Gewindegang des Außengewindes 27 vorhanden ist, um ein leichtes Aufschrauben des Befestigungsringes 30 zu ermöglichen. Bei Erreichen der Zunge 29 drückt der Verriegelungsvorsprung die Zunge 29 in Richtung auf den Ringflansch 7'. Sobald der Verriegelungsvorsprung 32 die Verriegelungskante 31 vollständig passiert hat, federt die Zunge 29 zurück, so dass die Verriegelungskante 31 hinter den Verriegelungsvorsprung 32 greift. Dadurch ist eine Rückdrehsicherung gebildet, die den Befestigungsring auf dem Rohrstutzen 13' sichert. Um in der vorgegebenen Position ein weiteres Drehen in Aufschraubrichtung zu verhindern, ist der aus Fig. 5 ersichtliche Anschlag 33 vorgesehen.

Sobald der Anschlussstutzen 6, 6' auf die zuvor beschriebene Weise am Gehäuse 2 montiert ist, kann die Filterpatrone 4 in das Gehäuse 2 eingeschoben werden, wobei das Stützgitter 14, 14' in den zentrischen Raum der Filterpatrone 4 ragt. Die Filterpatrone 4 wird soweit eingeschoben, bis der stirnseitige Verschluss 5 an dem radialen Flansch 23, 23' des Befestigungsringes 22, 30 und Abstützelementen 21 auf der Innenseite des stirnseitigen Endes 8 des Gehäuses 2 anliegt.

## Patentansprüche

1. Filtervorrichtung, bestehend aus einem Gehäuse (2) und einem darin befindlichen Filtereinsatz (4) sowie einer an dem Gehäuse (2) ausgebildeten Einlassöffnung (3) und einem an einer Gehäusewand angeordneten Auslassstutzen (6, 6'), wobei der Filtereinsatz (4) im Strömungsweg zwischen der Einlassöffnung (2) und dem Auslassstutzen (6, 6') vorgesehen ist, **dadurch gekennzeichnet, dass** der Auslassstutzen (6, 6') eine Anlagefläche (7, 7') zur Anlage am Gehäuse (2) aufweist und mit einem Rohrabschnitt (13, 13') versehen ist, der durch eine Öffnung (9) des Gehäuses (2) ragt, und an dem ein Befestigungselement (22, 30) montiert ist, wobei ein die Öffnung (9) umgebender Bereich (10) des Gehäuses (2) zwischen der Anlagefläche (7, 7') des Auslassstutzens (6, 6') und dem Befestigungselement (22, 30) eingespannt ist.

2. Filtervorrichtung nach Anspruch 1, **dadurch gekennzeichnet, dass** als Befestigungselement ein Befestigungsring (22, 30) vorgesehen ist, der auf der Mantelfläche des Rohrabschnitts (13, 13') fixiert ist.

3. Filtervorrichtung nach Anspruch 1 oder 2, **dadurch gekennzeichnet, dass** die Anlagefläche an einem Ringflansch (7, 7') des Auslassstutzens (6, 6') ausgebildet ist.

4. Filtervorrichtung nach Anspruch 2, **dadurch gekennzeichnet, dass** zur Fixierung des Befestigungsringes (22) auf dem Rohrabschnitt (13) eine Schnapp- oder Rastverbindung vorgesehen ist.

5. Filtervorrichtung nach Anspruch 4, **dadurch gekennzeichnet, dass** an dem Rohrabschnitt (13) oder dem Befestigungsring (22) wenigstens ein umlaufender Vorsprung (20, 24) ausgebildet ist, der mit einem radialen Vorsprung (20, 24) oder einer radialen Vertiefung des jeweils anderen Bauteils (13, 22) zusammenwirkt.

6. Filtervorrichtung nach Anspruch 5, **dadurch gekennzeichnet, dass** sowohl der Rohrabschnitt (13) als auch der Befestigungsring (22) mit einem umlaufenden Vorsprung (20, 24) versehen sind und in Montagerichtung gesehen vor dem jeweiligen Vorsprung (22, 24) ein Einführkonus (19) bzw. eine Einführschräge (25) vorgesehen sind.

7. Filtervorrichtung nach Anspruch 5 oder 6, **dadurch gekennzeichnet, dass** in Montagerichtung hinter dem jeweiligen Vorsprung (20, 24) bzw. Vertiefung durch Schrägflächen (18, 26) eine keilförmige Geometrie gebildet ist.

8. Filtervorrichtung nach Anspruch 7, **dadurch gekennzeichnet, dass** an dem Rohrabschnitt (13) eine Ringnut (17) vorgesehen ist, die von der Schrägfläche (18) begrenzt wird, und in die der am Befestigungsring (22) ausgebildete Vorsprung (24) greift.

9. Filtervorrichtung nach Anspruch 2, **dadurch gekennzeichnet, dass** zur Montage des Befestigungsringes (30) auf dem Rohrabschnitt (13') eine Schraubverbindung vorgesehen ist.

10. Filtervorrichtung nach Anspruch 9, **dadurch gekennzeichnet, dass** der Rohrabschnitt (13') mit einem Außengewinde (27) und der Befestigungsring (30) mit einem Innengewinde versehen sind, wobei die Gewinde eine geringe Steigung aufweisen.

11. Filtervorrichtung nach Anspruch 9 oder 10, **dadurch gekennzeichnet, dass** an den Gewinden (27, 28) Vorrichtungen vorgesehen sind, die als Rückdrehsicherung dienen, wobei diese Vorrichtungen mindestens eine Verriegelungskante (31) und einen Verriegelungsvorsprung (32) umfassen.

12. Filtervorrichtung nach einem der Ansprüche 2 bis 11, **dadurch gekennzeichnet, dass** der Befestigungsring (22) einen radial nach außen gerichteten Flansch (23) aufweist, an dem ein Ende des Filtereinsatzes (4) anliegt.

13. Filtervorrichtung nach einem der Ansprüche 1 bis 12, **dadurch gekennzeichnet, dass** das Gehäuse (2) im Wesentlichen die Form eines Zylinders besitzt und der Filtereinsatz als Filterpatrone (4) ausgebildet ist.

14. Filtervorrichtung nach Anspruch 13, **dadurch gekennzeichnet, dass** der Auslassstutzen (6) an einem stirnseitigen Ende (8) des Gehäuses (2) und zentrisch zu der Filterpatrone (4) angeordnet ist.

15. Filtervorrichtung nach Anspruch 14, **dadurch gekennzeichnet, dass** an dem freien Ende des Rohrabschnitts (13) ein Stützgitter (14) angeordnet ist, das sich innerhalb der Filterpatrone (4) zumindest über einen Teil der axialen Länge erstreckt.

16. Filtervorrichtung nach Anspruch 14 oder 15, **dadurch gekennzeichnet, dass** an dem stirnseitigen Ende (8) des Gehäuses (2) ein axialer Abschnitt (11) angeformt ist, der in einen radialen Bund (10) über geht, in dem sich die Öffnung (9) zum Durchtritt des Rohrabschnitts (13) befindet.
